# NOUVEAU FASCICULE DE BREVET EUROPEEN

(11) **EP 2 188 154 B2**
(45) Date de publication et mention de la décision concernant l'opposition: **14.10.2015**
(45) Mention de la délivrance du brevet: 04.04.2012
(21) Numéro de dépôt: 08835418.8
(22) Date de dépôt: 09.09.2008
(51) Int. Cl.: B60R 19/12, B60R 19/18

(54) **ENSEMBLE D'UNE PEAU DE PARE-CHOCS ET DE MOYENS DE MASQUAGE**
KOMBINATION VON STOSSFÄNGERHAUT UND VERKLEIDUNGSTEIL
ASSEMBLY CONSISTING OF A BUMPER SKIN AND OF MASKING MEANS

(30) Priorité: 10.09.2007 FR 0757465
(43) Date de publication de la demande: 26.05.2010
(73) Titulaire: Compagnie Plastic Omnium, 69007 Lyon (FR)
(72) Inventeur: DELWAL, Fabien, F-01320 Chalamont (FR); CHERON, Hugues, F-01800 Meximieux (FR)
(74) Mandataire: Potdevin, Emmanuel Eric
(86) Numéro de dépôt international: PCT/FR2008/051607
(87) Numéro de publication internationale: WO 2009/044071

(56) Documents cités:
- EP-A- 0 703 008
- WO-A-2008/006495
- WO-A1-2007/090572
- DE-A1- 19 637 512
- DE-A1- 19 912 181
- DE-A1-102005 011 827
- US-A1- 2004 224 099
- US-B1- 6 511 109
- G. SKROBANEK ET AL.: 'Offenkundige Vorbenutzung BMW 1er-Baureihe', 2007, VERLAG DELIUS, KLASING & CO. KG, BIELEFELD page 240
- Diederichs Karosserieteile GmbH - Hauptkatalog 2004
- S. AUMANN, DIPL.-ING ET AL.: 'Der neue BMW 1er- ATZ/MTZ Sonderausgabe', Octobre 2004 pages 150 - 151
- So wird's gemacht, BMW 1er-Reihe - ISBN 978-3-7688-1838-4

## Description

La présente invention concerne le domaine des pare-chocs de véhicule automobile.

On connaît déjà dans l'état de la technique une pièce de carrosserie formant une peau de pare-chocs. La peau de pare-chocs comprend une face visible depuis l'extérieur du véhicule et est délimitée par des bords transversaux inférieur et supérieur. La peau de pare-chocs est également délimitée par des bords latéraux. Une portion de chaque bord latéral est reliée à chaque aile du véhicule et une autre portion délimite au moins en partie chaque passage de roues. Ces bords transversaux et latéraux peuvent comporter des portions rectilignes ou courbes, concaves ou convexes, selon le style de la peau de pare-chocs.

Une fois la peau de pare-chocs montée sur le véhicule, le bord supérieur comporte deux portions masquées par des organes rapportés du véhicule, par exemple deux blocs optiques. La portion du bord supérieur complémentaire des deux portions masquées par les blocs optiques est, elle, visible par l'utilisateur du véhicule, notamment dans une position d'ouverture du capot du véhicule automobile.

Afin de garantir une bonne qualité perçue et l'esthétique du véhicule, les bords supérieur et inférieur forment des retours s'étendant sensiblement au droit de la face visible de la peau de pare-chocs à laquelle ils sont reliés. Le retour formé par le bord supérieur permet d'offrir une bonne finition du véhicule, notamment lors de l'ouverture du capot du véhicule, alors que le retour formé par le bord inférieur permet généralement de contribuer au style du véhicule.

Au cours du procédé de peinture de la peau de pare-chocs, on dispose plusieurs peaux de pare-chocs sur un support vertical d'une chaîne de peinture de façon que les bords transversaux inférieur et supérieur de deux pièces successives soient adjacents.

Afin de peindre l'intégralité de chaque peau de pare-chocs, notamment la face visible et les retours formés par les bords, on utilise généralement des robots d'application de peinture aptes à se déplacer selon une trajectoire tridimensionnelle. D'une part, ces robots sont très onéreux et très complexes à commander. D'autre part, la trajectoire étant tridimensionnelle, le temps nécessaire à l'application de la peinture est relativement grand. Enfin, les espaces entre les peaux d'un même support doivent être relativement grands pour permettre le passage des robots entres les peaux et l'application de peinture sur les retours formés par les bords. Ces espaces entre les peaux diminuent le nombre de peaux pouvant être disposées sur le support et donc le rendement de la chaîne de peinture.

L'invention a pour but de simplifier le procédé de peinture de la peau de pare-chocs.

A cet effet, l'invention a pour objet un ensemble selon la revendication 1.

Une telle pièce de carrosserie peut être peinte par un procédé simple.

En effet, les bords transversaux supérieur et inférieur de la pièce de carrosserie étant masqués d'un bord latéral à l'autre par les organes rapportés et les premier et second éléments de masquage, il est alors inutile de peindre les retours formés par les bords supérieur et inférieur. Il est alors même possible de disposer d'une pièce de carrosserie présentant des bords transversaux ne formant pas de retour.

Du fait de la non-nécessité de peindre les retours formés par les bords transversaux, il est alors possible, d'une part, de réduire les espaces entre les pièces de carrosserie d'un même support et donc de disposer un nombre relativement grand de pièces de carrosserie sur le support de peinture et, d'autre part, d'utiliser des robots d'application aptes à ne se déplacer que selon une trajectoire bidirectionnelle et donc de permettre une application de la peinture relativement rapide en utilisant des robots dont le coût est relativement faible et le fonctionnement relativement simple. De tels robots sont par exemple des réciprocateurs à deux dimensions.

De telles pièces de carrosserie peuvent être imbriquées les unes dans les autres lors du procédé de peinture ce qui permet d'augmenter encore davantage le nombre de pièces pouvant être disposées sur le support de peinture.

En outre, l'échancrure étant apte à recevoir la ou les saillies d'une autre pièce identique, le passage de l'applicateur au voisinage de l'échancrure permet de peindre également la ou les saillies de l'autre pièce identique positionnée dans l'échancrure ce qui permet de réduire les pertes classiques de peinture liées à l'application de peinture au voisinage des bords des pièces à peindre.

Selon une caractéristique optionnelle de l'ensemble selon l'invention, l'organe rapporté masquant au moins une portion du bord supérieur de la pièce de carrosserie comprend un bloc optique.

Selon une autre caractéristique optionnelle de l'ensemble selon l'invention :
soit une première pièce identique à la pièce de carrosserie, obtenue pas translation vers le haut de la pièce de carrosserie en position d'utilisation sur le véhicule, et
soit une deuxième pièce identique à la pièce de carrosserie, obtenue par translation vers le bas de la pièce de carrosserie en position d'utilisation sur le véhicule,
la pièce de carrosserie est formée de sorte que toute portion du bord supérieur de la pièce de carrosserie, respectivement inférieur, projetée sur un plan de projection perpendiculaire à la direction longitudinale en position d'utilisation sur le véhicule, délimitant une partie projetée convexe non plane de la pièce, est en regard d'une portion du bord inférieur, respectivement supérieur, projetée sur le plan de projection, délimitant une partie concave ou plane de la première pièce, respectivement de la deuxième pièce.

Une telle pièce permet d'optimiser l'encombrement des pièces sur le support de peinture et donc d'augmenter le nombre de pièces pouvant être disposées sur le support de peinture. En effet, la pièce est formée de sorte que les bords supérieur et inférieur suivent, au moins sur certaines portions, des trajectoires sensiblement parallèles, ce qui permet d'optimiser l'encombrement d'un ensemble de pièces superposées dans lequel les bords inférieur et supérieur de deux pièces successives sont en regard l'un de l'autre.

Selon une caractéristique optionnelle de l'ensemble selon l'invention, les premier et second éléments de masquage sont d'une seule pièce issue de moulage, de préférence dans une matière plastique.

Optionnellement, lequel les premier et second éléments de masquage sont reliés entre eux par des moyens de liaison déformables élastiquement.

Dans le cas où les premier et second éléments de masquage sont d'une seule pièce, les moyens de liaison déformables permettent d'ajuster la position des premier et second éléments de masquage par rapport à la carrosserie en déformant élastiquement les moyens de liaison. Ces moyens de liaison permettent ainsi de rapporter les éléments de masquage à la pièce malgré les éventuelles variations dimensionnelles de la pièce de carrosserie et des éléments de masquage.

Selon une autre caractéristique optionnelle de l'ensemble selon l'invention, l'ensemble comprend une pièce de support de la pièce de carrosserie comprenant :
- une partie de support destinée à supporter la pièce de carrosserie, et
- une partie visible depuis l'extérieur du véhicule une fois l'ensemble monté sur le véhicule, la partie visible comprenant les premier et second éléments de masquage.

La pièce de support assure ainsi la fonction de masquage du bord inférieur et de la portion complémentaire du bord supérieur, ainsi que la fonction de support de la peau de pare-chocs. Cette pièce de support peut également comporter d'autres parties aptes à exercer d'autres fonctions, par exemple d'absorption de chocs.

Avantageusement, la pièce de carrosserie comporte des moyens de fixation aux premier et second éléments de masquage venus de moulage avec la pièce de carrosserie.

De tels éléments de fixation permettent de fabriquer une pièce de carrosserie à faible coût.

Selon une caractéristique optionnelle de l'ensemble selon l'invention, au moins un de premier et second éléments de masquage comporte au moins un élément décoratif, par exemple une grille d'entrée d'air.

Ainsi, en disposant de modèles différents des premier et second éléments de masquage comportant des éléments décoratifs correspondant à différents niveaux de gamme, il est possible d'obtenir différents niveaux de gamme de l'ensemble en changeant au moins l'un des premier et second éléments de masquage.

De façon optionnelle, la pièce de carrosserie comprend des moyens de fixation de la pièce à au moins une autre pièce de carrosserie identique.

L'invention a également pour objet un véhicule automobile, caractérisé en ce qu'il comprend un ensemble tel que défini ci-dessus.

On prévoit également un procédé de peinture d'au moins une première et une deuxième pièces de carrosserie formant chacune une partie d'une peau de pare-chocs, les première et deuxième pièces étant identiques entre elles, dans lequel chaque première et deuxième pièce de carrosserie forme une pièce de carrosserie d'un ensemble tel que défini ci-dessus et dans lequel on applique de la peinture sur chaque première et deuxième pièce au moyen d'un applicateur mobile selon au plus deux dimensions.

Avantageusement, la deuxième pièce est suspendue à la première pièce.

On peut ainsi solidariser la deuxième pièce à la première pièce sans l'intermédiaire d'un support de peinture, mais directement par suspension de celle-ci à la première pièce. On pourra ainsi prévoir de suspendre plusieurs pièce de carrosserie successivement les unes aux autres, la pièce la plus haute étant la seule suspendue à un support.

L'invention sera mieux comprise à la lecture de la description qui va suivre, donnée uniquement à titre d'exemple non limitatif et faite en se référant aux dessins dans lesquels :
- la figure 1 est une vue en perspective d'un véhicule automobile selon l'invention ;
- la figure 2 est une vue en perspective d'un ensemble selon l'invention ;
- la figure 3 est une vue en perspective d'une pièce de carrosserie de l'ensemble de la figure 2 ;
- la figure 4 est une vue en perspective d'une pièce de support de l'ensemble de la figure 2 ;
- la figure 5 est une vue partielle en perspective de la pièce de support de la figure 4;
- la figure 6 est une autre vue en perspective de la pièce de support de la figure 5 ;
- la figure 7 est une vue en perspective d'un ensemble de pièces de carrosserie peintes selon un procédé de peinture selon un premier mode de réalisation ;
- la figure 8 est une vue en perspective d'un ensemble de pièces de carrosserie peintes selon un procédé de peinture selon un deuxième mode de réalisation,
- la figure 9 est une vue en perspective de la pièce de la figure 3 et de première et deuxième pièces obtenues par translation de cette pièce respectivement vers le haut et vers le bas.

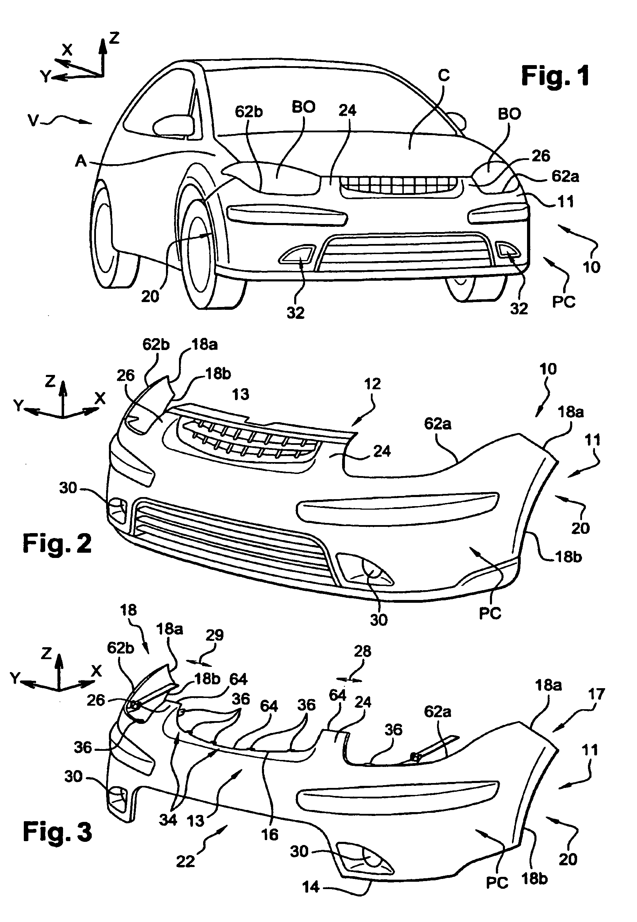

Sur les figures 1 à 6, on a représenté des axes X, Y, Z orthogonaux entre eux correspondant aux orientations habituelles longitudinale X, transversale Y et verticale Z d'un véhicule. L'axe longitudinal est orienté de l'avant vers l'arrière du véhicule.

On a représenté sur la figure 1 un véhicule automobile selon l'invention désigné par la référence générale V.

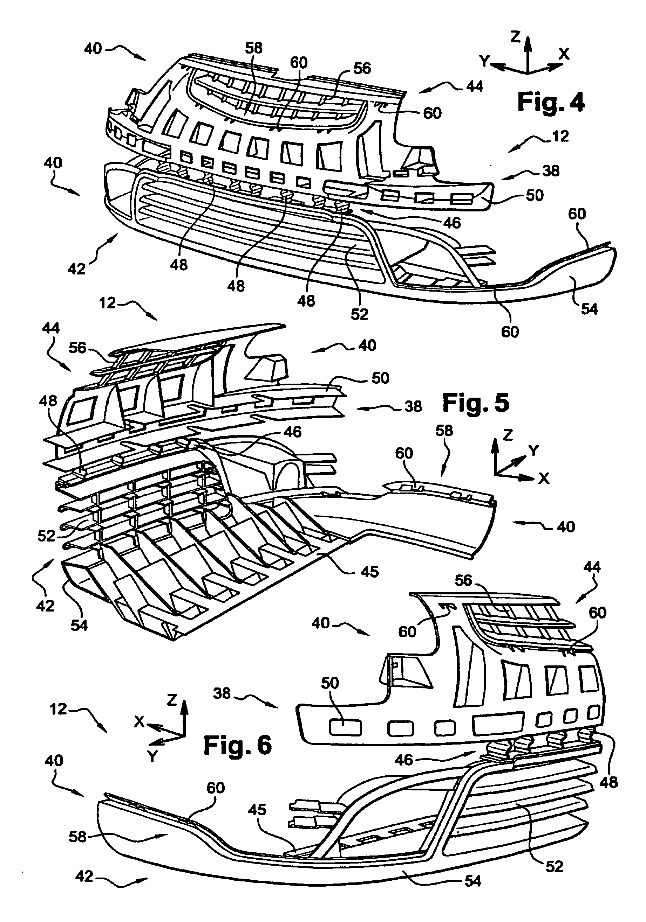

Le véhicule V comprend un ensemble 10 avant rapporté sur le véhicule automobile, et représenté sur la figure 2. L'ensemble 10 comprend une pièce de carrosserie 11 formant une partie d'une peau de pare-chocs PC du véhicule et une pièce de support 12 de la pièce de carrosserie 11, représentée sur les figures 4 et 6. Le véhicule V comprend également d'autres pièces de carrosserie comme un capot C, mobile par rapport à la pièce de carrosserie 11, et des ailes A. Le véhicule V comprend également deux blocs optiques BO disposés sensiblement symétriquement par rapport à un plan longitudinal médian du véhicule sensiblement parallèle au plan XZ.

Comme cela est également représenté sur les figures 2 et 3, la pièce 11 comprend une face 13 visible depuis l'extérieur du véhicule V et est délimitée par des bords transversaux inférieur 14 et supérieur 16. La pièce 11 est également délimitée par deux bords latéraux 17, 18. Chaque bord latéral 17, 18 comprend une première portion 18a reliée à chaque aile A et une deuxième portion 18b qui délimite au moins en partie chaque passage de roues 20. Les bords 14 et 16 forment des retours s'étendant sensiblement perpendiculairement par rapport à la face visible 13. Ces retours présentent une dimension inférieure ou égale à 10 mm, voire 7mm et, de préférence, 5mm.

Le bord inférieur 14 de la pièce 11 délimite une échancrure 22 ménagée dans la pièce. Cette échancrure s'étend, selon la direction Y, sur environ la moitié de la largeur d la pièce 11 et, selon la direction Z, sur environ un tiers de la hauteur de la pièce 11. Le bord supérieur 16 délimite deux saillies 24, 26 formant deux parties visibles de la pièce 11 une fois celle-ci montée sur le véhicule comme cela représenté sur la figure 1. Les deux saillies 24, 26 s'étendent sensiblement selon la direction verticale Z et sont disposées symétriquement par rapport au plan longitudinal médian du véhicule V. Chaque saillie s'étend, selon la direction Y, sur une portion 28, 29 du bord supérieur 16 située à l'opposé de l'échancrure 22 par rapport à un plan horizontal médian de la pièce 11, parallèle au plan XY.

La pièce 11 comprend également deux orifices 30 pour le passage d'organes d'éclairage inférieurs 32, en l'espèce des feux anti-brouillard.

Comme cela est représenté à la figure 3, la pièce 11 comporte des moyens de fixation 34 à la pièce de support 12. Ces moyens de fixation 34 sont venus de moulage avec la pièce 11. En l'espèce, la pièce 11 étant moulée dans une matière plastique, les moyens de fixations 34 comprennent des éléments de fixation élastique comme des clips 36.

On a représenté sur les figures 4, 5 et 6, la pièce de support 12. La pièce 12 est moulée d'une seule pièce, de préférence dans une matière plastique, notamment une matière plastique injectée. La pièce 12 comporte une partie 38 destinée à supporter la pièce 11 et située en regard de la pièce 11, derrière celle-ci une fois l'ensemble 10 monté sur la véhicule V. La pièce 12 comprend également une partie 40, visible depuis l'extérieur du véhicule V une fois l'ensemble 10 monté sur celui-ci. Cette partie 40 comprend des premier et second éléments 42, 44 destinés à être fixés sur la pièce de carrosserie 11 par l'intermédiaire des moyens 34. Enfin, la pièce 12 comprend un convergent inférieur 45 assurant une fonction de guidage de l'air, et éventuellement une fonction d'absorption des chocs.

La partie 38 comprend des moyens de liaison 46 des premier et second éléments 42, 44 entre eux. Ces moyens de liaison 46 sont déformables élastiquement et comprennent plusieurs organes de liaison 48 répartis selon la direction Y entre les premier et second éléments 42, 44. Chaque organe 48 présente, dans un plan parallèle au plan YZ, une section ondulée. La partie 38 comprend également un organe 50 d'absorption des chocs destinés à recevoir une poutre de chocs.

Le premier élément 42, situé en partie basse de l'ensemble 11, comporte une grille d'entrée d'air 52 ainsi qu'un spoiler 54. Le second élément 44, situé en partie haute de l'ensemble 11, comporte un élément décoratif, en l'espèce une calandre 56. Chaque élément 42, 44 comprend, en outre, des moyens de fixation 58 de la pièce de support 12 à la pièce de carrosserie 11, ces moyens 58 étant complémentaires des moyens 34. En l'espèce, les moyens 58 comprennent des orifices 60 de réception des clips 36.

Comme représenté sur la figure 2, le bord inférieur 14 est masqué depuis le bord latéral 17 jusqu'au bord latéral 18 par le premier élément 42 qui forme ainsi un premier élément de masquage du bord inférieur 14 de la pièce de carrosserie 11. En particulier, la grille d'entrée d'air 52 masque le bord inférieur de l'échancrure 22.

Comme représenté sur les figures 1 à 3, le bord supérieur 16 comporte deux portions 62a, 62b masquées par deux organes du véhicule une fois la pièce de carrosserie 11 montée sur le véhicule V, en l'espèce les blocs optiques BO. Le bord supérieur 16 comporte également une portion 64, complémentaire des portions 62a, 62b, de sorte que les portions 62a, 62b et 64 forment le bord 16 qui s'étend depuis le bord latéral 17 jusqu'au bord latéral 18. La portion 64 du bord 16 est masquée par le second élément 44 qui forme ainsi un second élément de masquage de la portion 64 du bord supérieur 16. Une fois rapportés à la pièce de carrosserie 11, les premier et second éléments de masquage 42, 44 sont fixes par rapport à la pièce de carrosserie.

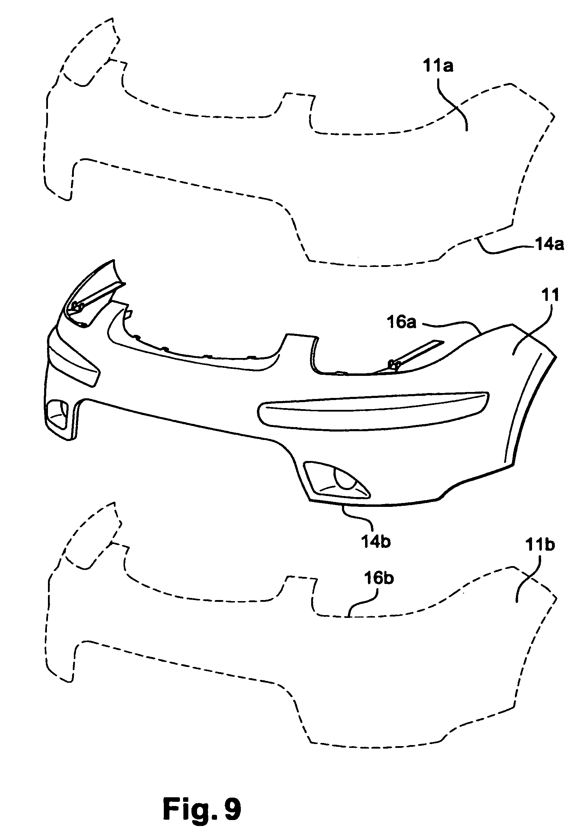

Comme représentée sur la figure 9, la pièce de carrosserie 11 est formée de sorte que toute portion 16a du bord supérieur 16 de la pièce de carrosserie projetée sur un plan de projection transversal perpendiculaire à la direction longitudinale, sensiblement parallèle au plan YZ, délimitant une partie projetée convexe non plane de la pièce, est en regard d'une portion 14a du bord inférieur projetée sur le plan transversal de projection, délimitant une partie concave ou plane d'une première pièce 11a. Cette première pièce 11a, représentée en pointillée sur la figure 9, est obtenue par translation vers le haut de la pièce 11 en position d'utilisation sur le véhicule.

La pièce de carrosserie 11 est également formée de sorte que toute portion du bord inférieur 14b, projetée sur le plan de projection en position d'utilisation sur le véhicule, délimitant une partie projetée convexe non plane de la pièce, est en regard d'une portion 16b du bord supérieur, projetée sur le plan transversal, délimitant une partie concave ou plane d'une deuxième pièce 11 b. Cette deuxième pièce 11 b, représentée également en pointillée sur la figure 9, est obtenue par translation vers le bas de la pièce 11 en position d'utilisation sur le véhicule.

La pièce de carrosserie 11 de l'ensemble 10 selon l'invention peut être peinte conformément à un procédé de peinture dont on précisera ci-dessous les principaux aspects.

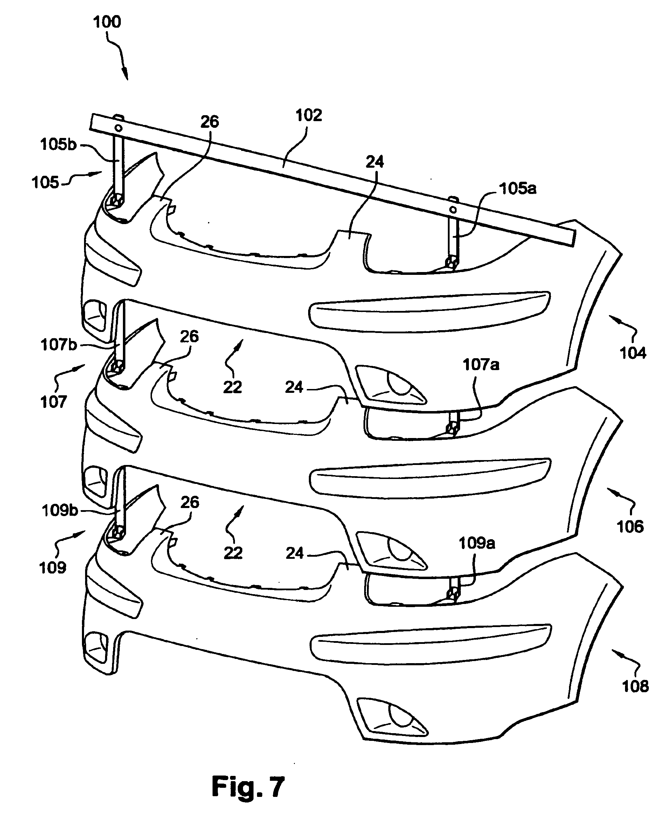

On a représenté sur la figure 7 un ensemble de pièces de carrosserie 11 peintes selon un procédé de peinture selon un premier mode de réalisation.

Une installation de peinture 100 comprend un support 102 formant cintre. On suspend à ce support 102 des première, deuxième et troisième pièces de carrosserie à peindre et respectivement référencées 104, 106, 108. Ces trois pièces sont identiques entre elles. En l'espèce, la pièce 104 est obtenue par déplacement vers le haut de la deuxième pièce de carrosserie 106 en position d'utilisation sur le véhicule et la pièce 108 est obtenue par déplacement vers le bas de la pièce de carrosserie en position d'utilisation sur le véhicule. Ce déplacement comporte une translation, éventuellement complétée par une rotation de quelques degrés autour d'un axe sensiblement parallèle à l'axe transversal Y.

Chaque pièce de carrosserie comprend des moyens de fixation de chaque pièce à au moins une autre pièce de carrosserie identique. En l'espèce, la première pièce 104 est suspendue au support 102 au moyens de premiers moyens de suspension 105, la deuxième pièce 106 est suspendue à la première pièce 102 au moyen de deuxièmes moyens de suspension 107 et la troisième pièce 108 est suspendue à la deuxième pièce 106 au moyen de troisième moyens de suspension 109.

Les moyens de suspensions 105, 107, 109 comprennent respectivement des tiges 105a, 105b, 107a, 107b et 109a, 109b. Ces tiges sont de préférence en matière plastique. Les tiges 105a, 105b sont fixées sur la partie haute de la pièce 104. Les tiges 107a, 107b sont fixées sur la partie haute de la pièce 106 et fixées sur la partie basse de la pièce 104. De façon analogue, les tiges 109a, 109b sont fixées sur la partie haute de la pièce 108 et sur la partie basse de la pièce 106.

Comme représentée sur la figure 7 sur laquelle les première, deuxième et troisième pièces 104, 106, 108 sont superposées les unes aux autres dans cet ordre, chaque pièce 104, 106, 108 est formée de sorte que, les saillies 24, 26 des deuxième et troisième pièces 106 et 108 sont aptes à être positionnées dans l'échancrure 22 respectivement des première et deuxième pièces 104, 106. L'échancrure 22 des première et deuxième pièces 104, 106 est apte à recevoir les saillies respectivement des deuxième et troisième pièces 106, 108.

De façon avantageuse, les tiges sont fixées de manière amovible sur les moyens de fixation 34 de deux pièces consécutives. Ainsi, on peint les pièces au moyen d'un applicateur mobile selon au plus deux dimensions, par exemple un réciprocateur et, après l'étape de peinture, les tiges sont retirées.

En variante, les tiges peuvent être mobiles entre :
- une position de suspension utilisée dans une étape d'application d'un produit, par exemple une étape de peinture de la pièce dans laquelle la pièce qui les porte est suspendue à la pièce située au-dessus,
- une position d'écartement (figure 3) utilisée dans une étape de transport de la pièce dans laquelle la tige permet de maintenir fixe un écart entre deux pièces consécutives.

En variante, les pièces 104, 106, 108 pourront être suspendues à deux éléments filaires continus, par exemple des câbles, fixés au support 102.

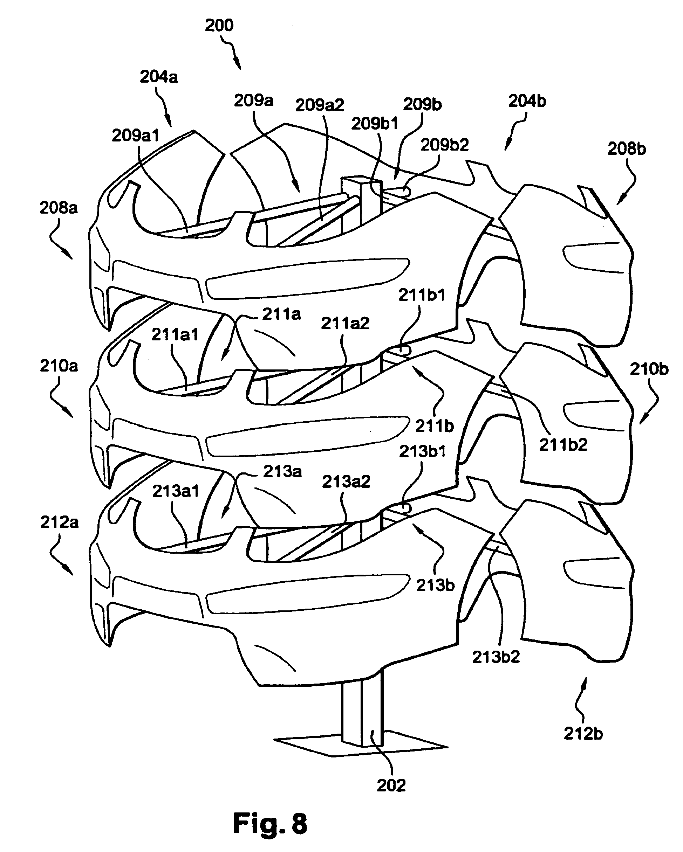

On a représenté sur la figure 8 un ensemble de pièces de carrosserie à peindre selon un procédé de peinture selon un deuxième mode de réalisation.

Sur cette figure 8, les éléments analogues à ceux représentés sur les figures précédentes sont désignés par des références identiques.

L'installation 200 comprend un support 202 formant mât. L'installation comprend également des premier et deuxième ensembles 204a, 204b de trois pièces. Le premier ensemble 204a comprend des première, deuxième et troisième pièces 208a, 210a, 212a. Chaque pièce 208a, 210a, 212a est indépendamment fixée au mât 202 respectivement par des moyens de fixation 209a, 211a, 213a. Chaque moyen 209a, 211a, 213a comprend deux barres d'espacement 209a1, 209a2, 211a1, 211a2, 213a1, 213a2 s'étendant depuis le mât 202 jusqu'à la pièce correspondante. Le deuxième ensemble 204b est agencé symétriquement au premier ensemble 204a par rapport à un plan vertical P. Les références de ce deuxième ensemble 204b se déduisent *mutatis mutandis* de celles du premier ensemble 204a.

Comme représenté sur la figure 8, la longueur des barres d'espacement est fonction de la distance nécessaire pour mettre dos à dos deux pièces de carrosserie sans que ces dernières se touchent. Dans l'installation représentée, les extrémités des pièces de carrosserie sont mises quasiment à affleurement l'une de l'autre de façon à minimiser l'encombrement de l'installation. Ainsi, les pièces de carrosseries sont formées de façon à minimiser l'encombrement de deux pièces mises dos à dos.

L'invention ne se limite pas aux modes de réalisation précédemment décrits.

En effet, la pièce de carrosserie pourra être réalisée en tôle.

En outre, la pièce de carrosserie pourra être moulée par injection, compression ou bien par thermoformage.

La peau de pare-chocs pourra également comporter un ou plusieurs éléments décoratifs venus de moulage ou rapportés tels que des absorbeurs de chocs ou des enjoliveurs de feu antibrouillard.

On pourra notamment prévoir, indépendamment des autres caractéristiques, un procédé de peinture d'au moins une première et une deuxième pièces de carrosserie formant chacune une partie d'une peau de pare-chocs, les première et deuxième pièces étant identiques entre elles, dans lequel on applique de la peinture sur chaque première et deuxième pièce au moyen d'un applicateur mobile selon au plus deux dimensions.

De plus, on notera que les caractéristiques :
- de la pièce de carrosserie 11,
- des éléments de masquages 42, 44,
- de la pièce de support 12, et
- du procédé de peinture, et
- de l'ensemble 10
décrits ci-dessus peuvent être mises en oeuvres indépendamment les unes des autres et indépendamment du fait que l'ensemble comprend au moins un premier élément rapporté de masquage du bord inférieur et au moins un second élément rapporté de masquage d'une portion du bord supérieur complémentaire de la ou des portions du bord supérieur destinées à être masquées par le ou les organes une fois l'ensemble monté sur le véhicule, les premier et second éléments de masquage étant fixes par rapport à la pièce de carrosserie.

## Revendications

1. Ensemble (10) destiné à être rapporté sur un véhicule automobile (V) comprenant une pièce de carrosserie (11, 104, 106, 108, 208a, 210a, 212a, 208b, 210b, 212b) destinée à former au moins une partie d'une peau de pare-chocs (PC) du véhicule, la pièce étant délimitée par des bords inférieur (14) et supérieur (16), le bord supérieur comportant au moins une portion (62a, 62b) destinée à être masquée par au moins un organe (BO) du véhicule rapporté à la pièce une fois la pièce montée sur le véhicule, **caractérisé en ce que** l'ensemble (10) comprend au moins un premier élément (42) rapporté de masquage du bord inférieur et au moins un second élément (44) rapporté de masquage d'une portion (64) du bord supérieur complémentaire de la ou des portions du bord supérieur destinées à être masquées par le ou les organes une fois l'ensemble monté sur le véhicule, les premier et second éléments (42, 44) de masquage étant fixes par rapport à la pièce de carrosserie, et **caractérisé en ce que** le bord inférieur (14) délimite une échancrure (22) ménagée dans la pièce de carrosserie et le bord supérieur (16) délimite au moins une saillie (24, 26) formant une partie visible de la pièce une fois celle-ci montée sur le véhicule, la pièce de carrosserie étant formée de sorte que :
chaque saillie (24, 26) de la pièce de carrosserie (106, 210a, 210b) est apte à être positionnée dans l'échancrure (22) d'une première pièce de carrosserie identique (104, 208a, 208b), et
l'échancrure (22) de la pièce de carrosserie (106, 210a, 210b) est apte à recevoir la ou les saillies d'une deuxième pièce de carrosserie identique (108, 212an 212b).

2. Ensemble (10) selon la revendication 1, dans lequel l'organe rapporté masquant au moins une portion (62a, 62b) du bord supérieur (16) de la pièce de carrosserie comprend un bloc optique (BO).

3. Ensemble (10) selon l'une quelconque des revendications précédentes, dans lequel les premier et second éléments de masquage (42, 44) sont d'une seule pièce issue de moulage, de préférence dans une matière plastique.

4. Ensemble (10) selon l'une quelconque des revendications précédentes, dans lequel les premier et second éléments de masquage (42, 44) sont reliés entre eux par des moyens de liaison (46) déformables élastiquement.

5. Ensemble (10) selon l'une quelconque des revendications précédentes, comprenant une pièce de support (12) de la pièce de carrosserie comprenant :
- une partie de support (38) destinée à supporter la pièce de carrosserie, et
- une partie visible (40) depuis l'extérieur du véhicule une fois l'ensemble monté sur le véhicule, la partie visible comprenant les premier et second éléments de masquage (42, 44).

6. Ensemble (10) selon l'une quelconque des revendications précédentes, dans lequel la pièce de carrosserie (11) comporte des moyens de fixation (34) aux premier et second éléments de masquage (42, 44) venus de moulage avec la pièce de carrosserie (11).

7. Ensemble (10) selon l'une quelconque des revendications précédentes, dans lequel au moins un des premier et second éléments de masquage (42, 44) comporte au moins un élément décoratif, par exemple une grille d'entrée d'air (52).

8. Ensemble (10) selon l'une quelconque des revendications précédentes, dans lequel la pièce de carrosserie (11) comprend des moyens de fixation (105, 107, 109) de la pièce à au moins une autre pièce de carrosserie identique.

9. Véhicule automobile (V), **caractérisé en ce qu'**il comprend un ensemble (10) selon l'une quelconque des revendications précédentes.

## Patentansprüche

1. Anordnung (10), die dazu bestimmt ist, an ein Kraftfahrzeug (V) angebaut zu werden, das ein Karosserieteil (11, 104, 106, 108, 208a, 210a, 212a, 208b, 210b, 212b) aufweist, das dazu bestimmt ist, mindestens einen Teil einer Stoßstangenverkleidung (PC) des Fahrzeugs zu bilden, wobei das Teil von einem unteren (14) und einem oberen Rand (16) begrenzt ist, wobei der obere Rand mindestens einen Bereich (62a, 62b) aufweist, der dazu bestimmt ist, von mindestens einem Organ (BO) des Fahrzeugs, das an das Teil angebaut wird, sobald das Teil an das Fahrzeug montiert ist, verborgen zu werden, **dadurch gekennzeichnet, dass** die Anordnung (10) mindestens ein erstes angebautes Mittel (42) zum Verbergen des unteren Rands und mindestens ein zweites angebautes Mittel (44) zum Verbergen eines Bereichs (64) des oberen Rands aufweist, der zu dem oder den Bereichen des oberen Rands komplementär ist, die dazu bestimmt sind, von dem oder den Organen verborgen zu werden, sobald die Anordnung an das Fahrzeug montiert ist, wobei das erste und das zweite Verbergungsmittel (42, 44) in Bezug zu dem Karosserieteil fixiert sind, und **dadurch gekennzeichnet, dass** der untere Rand (14) eine Aussparung (22) begrenzt, die in dem Karosserieteil eingerichtet ist, und der obere Rand (16) mindestens einen Vorsprung (24, 26) begrenzt, der einen sichtbaren Teil des Teils bildet, sobald dieses an das Fahrzeug montiert ist, wobei das Karosserieteil derart ausgebildet ist, dass:
- jeder Vorsprung (24, 26) des Karosserieteils (106, 210a, 210b) in der Aussparung (22) ein ersten identischen Karosserieteils (104, 208a, 208b) positioniert werden kann, und
- die Aussparung (22) des Karosserieteils (106, 210a, 210b) den oder die Vorsprünge ein zweiten identischen Karosserieteils (108, 212a, 212b) aufnehmen kann.

2. Anordnung (10) nach Anspruch 1, bei der das angebaute Organ, das mindestens einen Bereich (62a, 62b) des oberen Rands (16) des Karosserieteils verbirgt, eine Scheinwerfereinheit (BO) aufweist.

3. Anordnung (10) nach einem der vorhergehenden Ansprüche, bei der das erste und das zweite Verbergungsmittel (42, 44) aus einem einzigen, vorzugsweise aus einem Kunststoff geformten Stück bestehen.

4. Anordnung (10) nach einem der vorhergehenden Ansprüche, bei der das erste und das zweite Verbergungsmittel (42, 44) untereinander durch Verbindungsmittel (46), die elastisch verformbar sind, verbunden sind.

5. Anordnung (10) nach einem der vorhergehenden Ansprüche, die einen Stützteil (12) des Karosserieteils aufweist, der Folgendes aufweist:
- einen Haltebereich (38), der dazu bestimmt ist, das Karosserieteil zu tragen, und
- einen Bereich (40), der von außerhalb des Fahrzeugs sichtbar ist, sobald die Anordnung an das Fahrzeug montiert ist, wobei der sichtbare Bereich das erste und das zweite Verbergungsmittel (42, 44) umfasst.

6. Anordnung (10) nach einem der vorhergehenden Ansprüche, bei der das Karosserieteil (11) Mittel zum Befestigen (34) an dem ersten und dem zweiten Verbergungsmittel (42, 44), die aus einem Stück mit dem Karosserieteil (11) geformt werden, aufweist.

7. Anordnung (10) nach einem der vorhergehenden Ansprüche, bei der mindestens eines des ersten und des zweiten Verbergungsmittels (42, 44) mindestens ein dekoratives Element, zum Beispiel ein Lufteintrittsgitter (52), aufweist.

8. Anordnung (10) nach einem der vorhergehenden Ansprüche, bei der das Karosserieteil (11) Mittel (105, 107, 109) zum Befestigen des Teils an mindestens einem anderen identischen Karosserieteil aufweist.

9. Kraftfahrzeug (V), **dadurch gekennzeichnet, dass** es eine Anordnung (11) nach einem der vorhergehenden Ansprüche aufweist.

## Claims

1. Assembly (10) for fitting to a motor vehicle (V), the assembly comprising a bodywork part (11, 104, 106, 108, 208a, 210a, 212a, 208b, 210b, 212b) for forming at least a portion of a bumper skin (PC) of the vehicle, the part being defined by bottom and top edges (14, 16), the top edge including at least one portion (62a, 62b) that is to be masked by at least one vehicle member (BO) that is fitted to the part after the part has been mounted on the vehicle, **characterized in that** the assembly (10) includes at least a first fitted masking element (42) masking the bottom edge and at least a second fitted masking element (44) masking a portion (64) of the top edge complementary to the portion(s) of the top edge that is/are to be masked by said vehicle member(s) once the assembly is mounted on the vehicle, the first and second masking elements (42, 44) being stationary relative to the bodywork part, and **characterized in that** the bottom edge (14) defines a notch (22) formed in the bodywork part and the top edge (16) defines at least one projection (24, 26) forming a visible portion of the part once mounted on the vehicle, the bodywork part being formed in such a manner that:
· each projection (24, 26) of the bodywork part (106, 210a, 210b) is suitable for being positioned in the notch (22) of a first identical bodywork part (104, 208a, 208b); and
· the notch (22) of the bodywork part (106, 210a, 210b) is suitable for receiving the projection(s) of a second identical bodywork part (108, 212a, 212b).

2. Assembly (10) according to claim 1, wherein the fitted member masking at least a portion (62a, 62b) of the top edge (16) of the bodywork part comprises a light unit (BO).

3. Assembly (10) according to any preceding claim, wherein the first and second masking elements (42, 44) are a single part made by molding, preferably by molding a plastics material.

4. Assembly (10) according to any preceding claim, wherein the first and second masking elements (42, 44) are connected together by elastically deformable connection means (46).

5. Assembly (10) according to any preceding claim, including a support part (12) for the bodywork part and comprising:
· a support portion (38) for supporting the bodywork part; and
· a portion (40) that is visible from outside the vehicle once the assembly is mounted on the vehicle, the visible portion having the first and second masking elements (42, 44).

6. Assembly (10) according to any preceding claim, wherein the bodywork part (11) includes fastener means (34) for fastening to the first and second masking elements (42, 44), which means are obtained by being molded integrally with the bodywork part (11).

7. Assembly (10) according to any preceding claim, wherein at least one of the first and second masking elements (42, 44) includes at least one decorative element, e.g. an air-inlet grille (52).

8. Assembly (10) according to any preceding claim, wherein the bodywork part (11) includes fastener means (105, 107, 109) for fastening the part to at least one other identical bodywork part.

9. Motor vehicle (V), **characterized in that** it includes an assembly (10) according to any preceding claim.
